# FASCICULE DE BREVET EUROPEEN

(11) **EP 2 864 054 B1**
(45) Date de publication et mention de la délivrance du brevet: **11.01.2017**
(21) Numéro de dépôt: 13774754.9
(22) Date de dépôt: 18.09.2013
(51) Int. Cl.: B05B 1/32, B05B 1/14, B05B 7/00, B05B 1/26, A47F 3/00, A47F 3/04, F24F 6/14, A47F 7/00, A23B 7/158

(54) **TÊTE DE DIFFUSION DE BROUILLARD POUR UNE INSTALLATION DE NÉBULISATION**
NEBELVERTEILUNGSKOPF FÜR EINE BENEBELUNGSVORRICHTUNG
FOG DISTRIBUTION HEAD FOR A FOGGING APPARATUS

(30) Priorité: 19.09.2012 FR 1258806
(43) Date de publication de la demande: 29.04.2015
(73) Titulaire: ARECO FINANCES ET TECHNOLOGIE - ARFITEC, 06130 Grasse (FR)
(72) Inventeur: GSCHWIND, Michel, F-06130 Plascassier - Grasse (FR); RICHARD, Frédéric, F-06220 Golfe Juan (FR)
(74) Mandataire: Potdevin, Emmanuel Eric
(86) Numéro de dépôt international: PCT/FR2013/052155
(87) Numéro de publication internationale: WO 2014/044971

(56) Documents cités:
- WO-A1-2010/106276
- WO-A1-2013/034847
- WO-A1-2013/060970
- FR-A1- 2 971 954
- US-A- 1 951 587
- US-A- 2 041 399
- US-A- 2 077 725
- US-A- 2 090 326
- US-A- 4 114 813
- US-A- 5 193 354
- US-A- 5 350 117

## Description

L'invention concerne les installations de diffusion d'un brouillard de gouttelettes d'eau nébulisée sur des produits.

On connaît du document WO-2010/106276 au nom de la demanderesse une telle installation, associée par exemple à un étalage d'exposition de produits alimentaires utilisé dans un lieu de vente. L'installation comprend des diffuseurs qui projettent le brouillard au-dessus des produits. Elle préserve la fraîcheur des produits, améliore leur aspect sur le présentoir et favorise leur vente.

L'installation comprend notamment un mât portant un bouchon à son extrémité supérieure. Le bouchon présente des conduits internes venant en coïncidence avec des orifices du mât afin de les mettre en communication avec la partie inférieure du mât et ainsi permettre la diffusion à l'extérieur du brouillard de gouttelettes provenant de la partie inférieure du mât. Si on fait tourner le bouchon, on supprime la coïncidence de sorte que les orifices sont obturés et que la diffusion est interrompue.

En dépit de ses nombreux avantages, un tel bouchon offre peu de souplesse pour régler la diffusion du brouillard sur les produits. En outre, il est relativement coûteux à réaliser en raison de son caractère massif.

Un but de l'invention est de régler la diffusion du brouillard sur les produits de façon plus souple et de réduire le coût de l'installation.

A cet effet, on prévoit selon l'invention une installation selon la revendication 1.

On prévoit également selon l'invention une installation selon la revendication 2.

On prévoit aussi selon l'invention une installation selon la revendication 3.

On prévoit aussi selon l'invention une installation selon la revendication 4.

Ainsi, on peut obturer ou ouvrir chacun des orifices indépendamment du ou des autres. Le choix du nombre d'orifices ouverts permet de régler la quantité de brouillard diffusée sur les produits. Et la possibilité d'ouvrir un orifice plutôt qu'un autre permet d'orienter la diffusion du brouillard selon la direction souhaitée, par exemple en direction de certains produits et non pas vers d'autres. Ce réglage peut être facilement modifié à tout moment en obturant certains des orifices et en en ouvrant d'autres. La tête selon invention offre donc une grande souplesse pour le réglage de l'intensité du ou des flux de brouillard et de leur orientation.

La tête selon l'invention pourra présenter en outre au moins l'une quelconque des caractéristiques suivantes :
- les obturateurs sont montés rotatifs par rapport au bâti ;
- chaque obturateur présente un axe de rotation vertical ;
- chaque obturateur présente un axe de rotation horizontal ;
- les obturateurs ont même axe de rotation ; et
- les obturateurs sont montés coulissants par rapport au bâti, notamment suivant une direction parallèle à un axe principal de la tête.

Avantageusement, la tête est agencée de sorte que chaque obturateur tend par gravité à occuper une position unique prédéterminée parmi une position d'obturation de l'orifice et une position d'ouverture de l'orifice, de préférence la position d'obturation.

On facilite ainsi la commande et l'utilisation de la tête. Il suffit en effet à l'opérateur de placer l'obturateur au voisinage de la position prédéterminée pour qu'il atteigne cette dernière et y demeure de façon stable.

Dans un mode de réalisation, la tête comprend des aimants aptes à retenir les obturateurs respectifs dans une position prédéterminée, de préférence une position d'ouverture de l'orifice par l'obturateur.

Les aimants forment un moyen simple et non mécanique pour retenir les obturateurs dans la position prédéterminée.

Avantageusement, chaque obturateur s'étend à l'intérieur de la tête et comprend un organe de manoeuvre s'étendant à l'extérieur de la tête.

L'opérateur peut donc agir directement sur l'obturateur pour le placer dans la position souhaitée, et ce sans avoir besoin d'ouvrir la tête.

De préférence, chaque obturateur traverse un orifice d'un couvercle de la tête.

On évite ainsi de ménager des ouvertures supplémentaires dans la paroi principale de la tête.

On peut prévoir que la tête comprend deux parois définissant les orifices, s'étendant l'une contre l'autre, entre lesquelles les obturateurs sont interposés et conformées pour guider les obturateurs.

On peut également prévoir que la tête comprend un distributeur interne distinct du bâti et apte à mettre l'orifice d'entrée en communication avec les orifices de sortie.

Puisqu'il est distinct du bâti, ce distributeur peut facilement être ôté pour être nettoyé. De plus, le distributeur pouvant être une pièce dissimulée à la vue, on peut librement choisir le matériau qui le constitue, notamment sans contrainte liée à l'aspect de ce matériau.

Avantageusement, les orifices de sortie sont au moins au nombre de trois.

De préférence, les orifices de sortie sont des orifices externes.

On prévoit aussi selon l'invention un procédé de diffusion d'un brouillard de gouttelettes sur des produits, dans lequel on utilise au moins une installation selon l'invention.

Nous allons maintenant présenter plusieurs modes de réalisation de l'invention à titre d'exemples non limitatifs et en référence aux dessins annexés sur lesquels :
- la figure 1 est une vue d'ensemble d'une installation selon un premier mode de réalisation de l'invention ;
- les figures 2 à 4 sont des vues en perspective de la tête de l'installation de la figure 1 ;
- les figures 5 et 6 sont des vues en perspective de l'un des obturateurs de la tête de la figure 2 ;
- la figure 7 est une vue analogue à la figure 2 montre une position intermédiaire d'ouverture des orifices ;
- les figures 8 à 12 sont des vues analogues aux figures 2 à 6, illustrant une tête selon un deuxième mode de réalisation de l'invention ;
- les figures 13 à 16 sont des vues analogues aux figures 2 à 6 illustrant une tête selon un troisième mode de réalisation de l'invention ;
- les figures 17 et 18 sont de vue en perspective d'une tête selon un quatrième mode de réalisation de l'invention ;
- les figures 19 à 22 sont des vues en perspective de différentes pièces de la tête de la figure 18 ; et
- la figure 23 est une vue analogue à la figure 18 montrant une étape d'assemblage de la tête.

### Présentation de l'installation

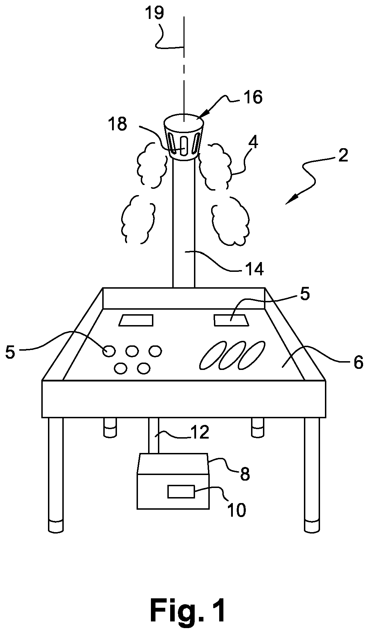

On a illustré à la figure 1 une installation 2 de présentation de produits alimentaires. Il s'agit ici d'un meuble formant en l'espèce une table. Dans le présent exemple, ce meuble est utilisé dans un lieu de vente de produits.

Les produits sont par exemple des produits frais 5 tels que des fruits et des légumes. L'installation est également utilisable pour d'autres produits alimentaires frais tels que de la viande ou du poisson. Elle est aussi applicable à des produits alimentaires tels que du fromage et plus généralement à tout produit sensible au dessèchement, par exemple des fleurs.

Le meuble forme ici un présentoir et comprend en partie supérieure un étalage 6 de forme rectangulaire en plan. Le présentoir comprend une paroi de fond et est ouvert en partie supérieure de sorte que les produits peuvent être observés ou pris par le public passant aux abords du présentoir.

Le meuble comprend des moyens pour la diffusion d'un brouillard de gouttelettes d'eau nébulisée, au-dessus des produits et jusqu'à ceux-ci afin d'en préserver la fraîcheur. Ces moyens comprennent un mât vertical 14 d'axe 19 et un équipement 8 permettant la génération du brouillard de gouttelettes d'eau et son acheminement jusqu'au mât. Cet équipement comprend notamment un coffret d'alimentation électrique qui alimente en courant un générateur de brouillard. Ce dernier comprend un ou plusieurs émetteurs d'ultrasons équipés par exemple d'une buse de concentration acoustique servant à la production du brouillard formé par des gouttelettes d'eau nébulisée en suspension dans un flux d'air. Le générateur est alimenté en eau par un moyen adapté. Un tel générateur est connu en lui-même notamment du document FR-2 788 706. L'installation comprend des conduits 12 au moyen desquels le brouillard produit par le ou les générateurs est transmis jusqu'au mât, à une extrémité axiale inférieure de ce dernier. L'ensemble est pourvu d'un boîtier de commande non illustré permettant de commander et de régler le fonctionnement du meuble. Le boîtier permet notamment de régler la vitesse de ventilation, c'est-à-dire la vitesse de l'air formant une partie du brouillard, la puissance de nébulisation et d'autres paramètres de la machine (cycle, seuil de sécurité, etc.).

L'installation comprend une tête 16 située au sommet du mât et assurant la diffusion du brouillard en direction des produits, la tête se trouvant plus haut que ces derniers.

Pour la simplicité de la description, l'installation comprend ici un unique mât 14 portant une unique tête 16. Il est cependant entendu qu'une telle installation peut comprendre plusieurs mâts portant chacun une tête de diffusion.

Nous allons décrire ci-après plusieurs modes de réalisation de la tête 16. Dans ces différents modes, les éléments homologues présentent des références numériques augmentées de 100.

### Premier mode de réalisation

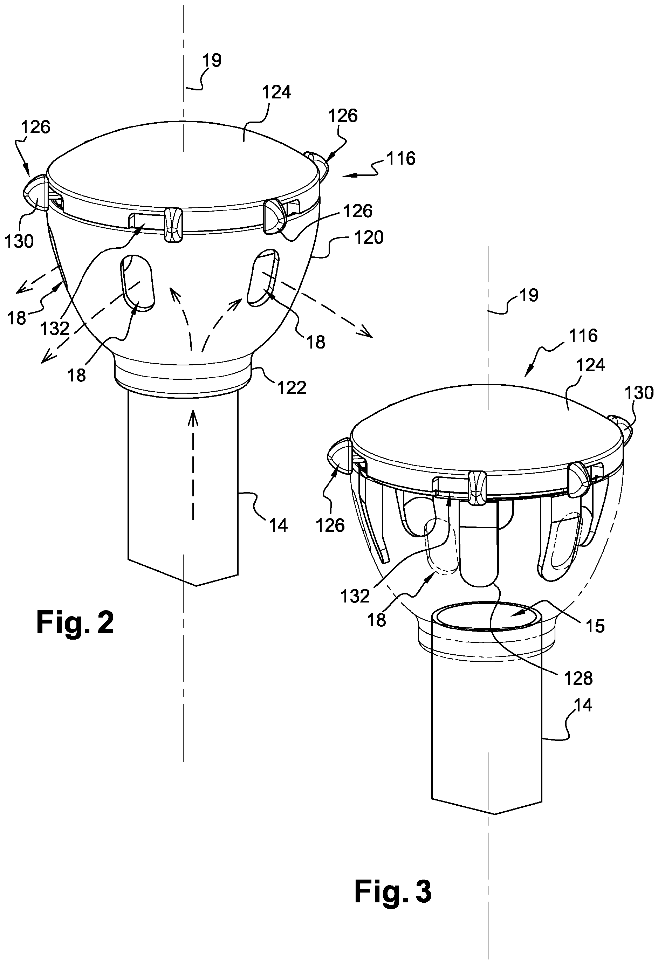

Un premier mode de réalisation de la tête 116 est illustré aux figures 2 à 7.

La tête a une forme générale à symétrie de révolution autour de l'axe 19. Elle comprend un corps 120 formé en l'espèce par un bol dont la paroi a en coupe dans un plan radial à l'axe 19 une forme en arc de cercle dont le centre de courbure se trouve à l'intérieur du bol. Le bol a une forme évasée et galbée, son diamètre allant en s'élargissant depuis la base du bol jusqu'à son bord supérieur. Ici, cette forme divise par six la vitesse du brouillard entre son entrée et sa sortie de la tête, en créant une détente du brouillard, et permet d'orienter vers le bas les orifices 18 du bol présentés plus loin.

Le bol 120 présente à son extrémité inférieure un rebord 122 par lequel il est enfilé sur l'extrémité supérieure du mât avec la tête coaxiale au mât. Ce rebord délimite un orifice inférieur 15 d'entrée du brouillard dans la tête pour le brouillard en provenance du mât.

Le bol 120 présente une ouverture circulaire supérieure s'étendant dans un plan perpendiculaire à l'axe 19 et obturée de façon étanche par un couvercle amovible 124 présentant un rebord emboîté dans l'ouverture du bol.

Le bol présente des orifices externes de sortie de brouillard 18 traversant sa paroi de part en part depuis l'extérieur vers l'intérieur du bol. Ces orifices sont ici au nombre de six mais ce nombre peut être varié et être par exemple égal à deux, trois, quatre ou cinq ou encore supérieur à six. Les orifices sont en l'espèce identiques les uns aux autres et régulièrement répartis autour de l'axe 19 en étant l'image les uns des autres par une rotation d'axe 19. Chaque orifice a ici une forme oblongue, en fente, s'étirant verticalement suivant une direction comprise dans un plan radial à l'axe 19. L'axe de chaque orifice est incliné par rapport aux directions verticale et horizontale. Le bol délimite une cavité interne 17 de la tête. Chaque orifice 18 met en communication l'orifice d'entrée 15 avec l'extérieur de la tête via la cavité commune 17, et ce indépendamment des autres orifices 18.

La tête 116 comporte des obturateurs 126 associés aux orifices de sortie respectifs 18 et en même nombre que ceux-ci. Les obturateurs sont aptes à obturer les orifices de sortie respectifs, chaque obturateur étant apte à obturer un seul des orifices de sortie. Les obturateurs sont identiques entre eux. Ils sont montés mobiles par rapport au bol indépendamment les uns des autres. En l'espèce, les obturateurs sont montés rotatifs par rapport au bol autour du même axe vertical formé par l'axe 19.

Chaque obturateur 126 comprend un bouchon 128 s'étendant à l'intérieur de la tête et un bouton de manoeuvre 130 s'étendant à l'extérieur de la tête.

Le couvercle présente un rebord inférieur présentant des faces cylindriques externe et interne à section circulaire dans un plan perpendiculaire à l'axe 19. Dans ce rebord sont ménagées des ouvertures traversantes radiales circonférentielles 132 en même nombre que les obturateurs et recevant ces derniers respectivement. Les ouvertures 132 sont ouvertes vers le bas au niveau du bord inférieur du couvercle venant en contact avec le bord supérieur du bol et présentent chacune une forme générale rectangulaire.

Chaque obturateur s'étend à travers l'une des ouvertures, la zone de jonction entre le bouchon et le bouton s'étendant dans l'ouverture. La zone de jonction comprend aussi une portion de guidage interne 133 présentant une face externe cylindrique 134 à section circulaire dans un plan perpendiculaire à l'axe 19 et de même rayon que la face interne du rebord du couvercle de façon à réaliser un contact surfacique avec cette dernière. Le bouton 130 vient par ailleurs en appui par sa face interne contre la face externe du rebord.

Le couvercle 124 comprend une paroi interne 136 en forme de disque, s'étendant en regard de la paroi externe du couvercle et rigidement fixée à cette dernière par des moyens classiques permettant son démontage, par exemple des vis 144 s'étendant dans des orifices de la paroi interne et en prise avec des filets correspondants de la paroi principale externe du couvercle. Les orifices de la paroi 136 présentent un épaulement sur lequel vient en appui la tête de chaque vis. La paroi interne 136 présente une face circonférentielle cylindrique 138 de section circulaire dans un plan perpendiculaire à l'axe 19 qui est apte à réaliser un contact surfacique avec une face interne 140 de même forme de la portion de guidage 133. Ces coopérations assurent le guidage à rotation de chaque obturateur par rapport au couvercle autour de l'axe 19.

La portion 133 et le bouton 130 présentent chacun une hauteur suivant la direction de l'axe plus grande que celle de l'ouverture 132. De même, la portion 133 présente une longueur en direction circonférentielle autour de l'axe plus grande que celle de l'ouverture. En outre, la portion de guidage 133 présente un rebord supérieur 142 venant en appui contre une face supérieure interne de la paroi 136. Grâce à cet agencement, les obturateurs sont retenus prisonniers dans les ouvertures 132, même lorsqu'on sépare le couvercle du bol.

Chaque bouchon 128 présente une face externe en contact surfacique avec la face interne du bol et apte à obturer l'intégralité de l'orifice 18 associé. C'est la position d'obturation occupée par l'obturateur lorsqu'il est en butée contre l'une des extrémités circonférentielles de l'ouverture 132. Pour les obturateurs visibles sur la face avant de la tête sur la figure 3, il s'agit de l'extrémité gauche de l'ouverture 132. À l'inverse, lorsque l'obturateur est en butée contre l'autre extrémité circonférentielle de l'ouverture, le bouchon laisse entièrement libre l'orifice 18. L'obturateur est alors en position d'ouverture, à l'extrémité droite de l'ouverture sur la figure 3.

L'installation fonctionne de la façon suivante. Le générateur de brouillard produit un brouillard de gouttelettes d'eau nébulisée en suspension dans un flux d'air, qui est acheminé de bas en haut dans le mât 14 jusqu'à l'orifice d'entrée 15 puis entre dans la cavité 17 de la tête comme indiqué par les flèches en traits pointillés de la figure 2. Le brouillard sort ensuite de la tête à travers les seuls orifices de sortie 18 dont les obturateurs sont en position d'ouverture. Le brouillard ne sort pas à travers les orifices de sortie dont les obturateurs sont en position d'obturation. Sachant que les orifices sont répartis tout autour de la tête, on peut ainsi sélectionner la ou les directions dans lesquelles on souhaite effectuer la diffusion du brouillard et donc la ou les zones de l'étalage destinées à recevoir le brouillard. À tout moment, l'un des boutons 130 peut être manoeuvré pour placer l'obturateur en position d'ouverture ou de fermeture, et ce indépendamment des autres obturateurs. On peut également placer tous les obturateurs en position d'ouverture afin que le brouillard soit diffusé en même temps à travers tous les orifices de sortie 18. À l'inverse, on peut obturer tous les orifices de sortie avec les obturateurs pour interdire toute diffusion du brouillard par la tête, et par exemple réserver cette diffusion à une autre tête de la même installation.

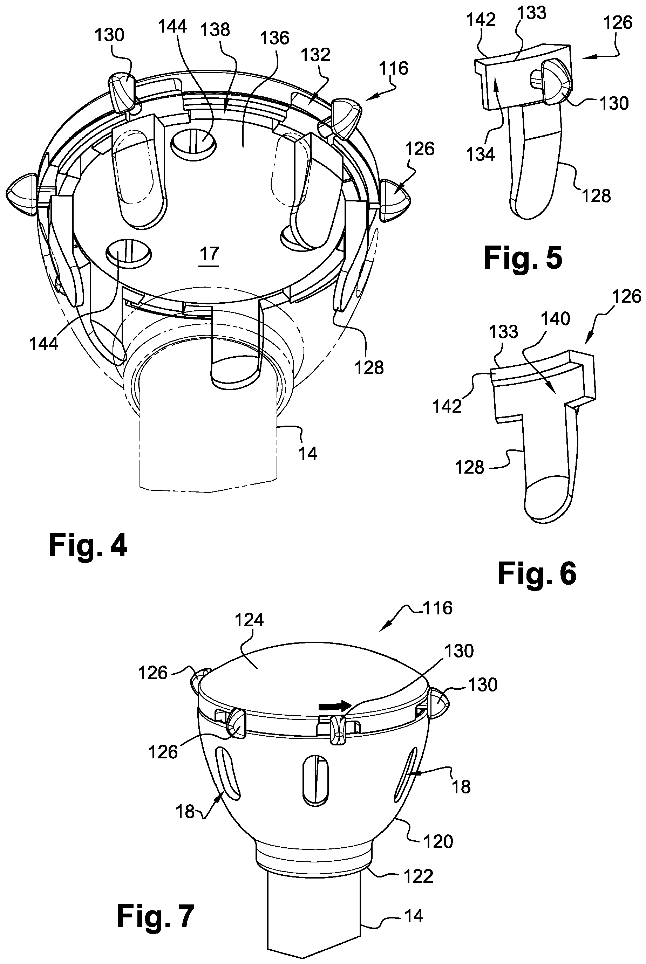

Comme illustré à la figure 7, on peut également placer au moins l'un quelconque des obturateurs 126 dans une position d'ouverture intermédiaire de l'orifice associé. En l'espèce, cette position intermédiaire peut être une position quelconque entre la position d'ouverture totale et la position de fermeture totale. L'obturateur y est retenu par friction. Dans une telle position d'ouverture intermédiaire, le débit de brouillard à travers l'orifice est globalement proportionnel à la section de l'orifice qui est ainsi laissée libre par l'obturateur.

Les boutons 130, qui présentent une forme aplatie dans un plan vertical radial à l'axe 19, sont particulièrement faciles à manipuler.

Grâce à la forme donnée au bol et aux obturateurs, s'il se produit de la condensation à l'intérieur de la tête, notamment sur les obturateurs, aucune goutte d'eau ne s'écoule hors de la tête. L'écoulement a lieu intégralement dans la tête et à l'intérieur du mat.

### Deuxième mode de réalisation

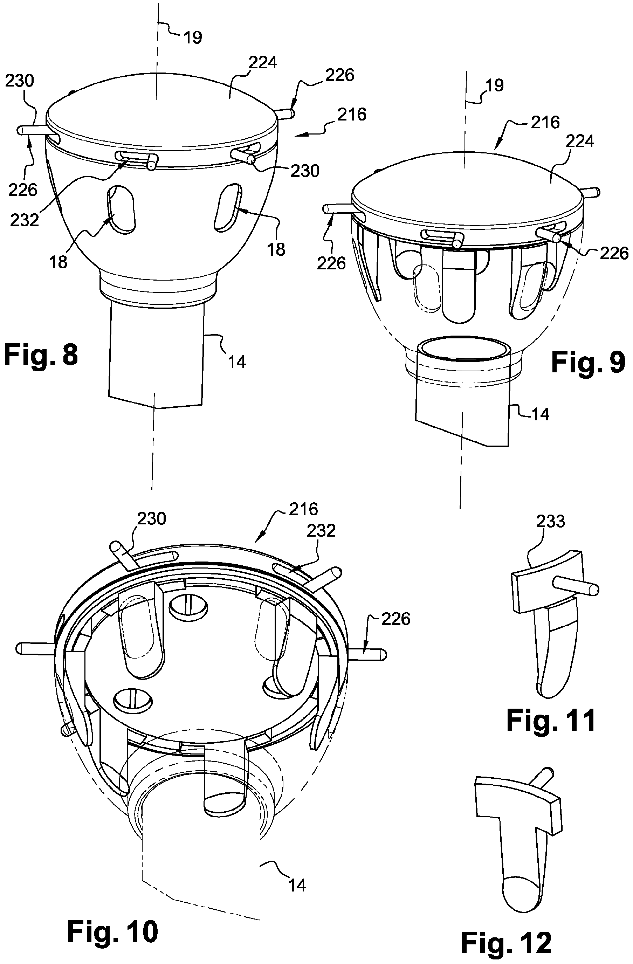

Nous allons maintenant décrire en référence aux figures 8 à 12 un deuxième mode de réalisation de la tête 216 de l'installation de la figure 1. La tête 216 est proche de celle du premier mode de réalisation. Elle en diffère par la forme des ouvertures 232 qui est ici non pas rectangulaire mais oblongue. De plus, ces ouvertures 232 sont cette fois fermées du côté du bord inférieur du couvercle. Le bouton 230 de chaque obturateur 226 a cette fois la forme d'une tige rectiligne s'étendant suivant une direction radiale à l'axe 19. Cette tige se prolonge à travers l'ouverture 232 pour constituer la partie de l'obturateur qui y est logée. La portion de guidage 233 de l'obturateur est dépourvue de rebord. C'est donc cette fois la tige 230 reçue dans l'ouverture 232 qui retient prisonnier l'obturateur dans le couvercle. Les autres caractéristiques de la tête sont identiques à celles du premier mode de réalisation. Le fonctionnement de l'installation est inchangé.

### Troisième mode de réalisation

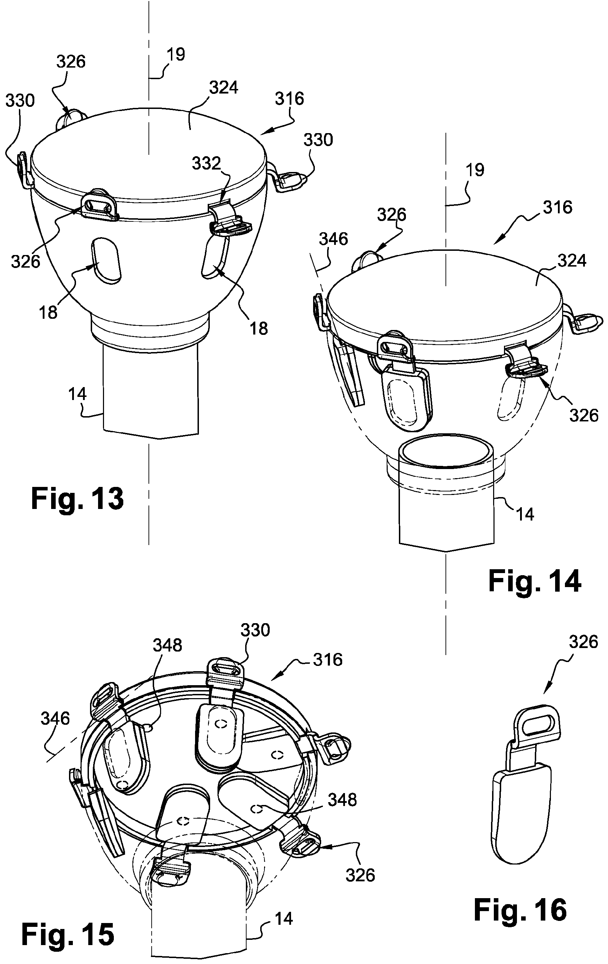

Nous allons maintenant décrire en référence aux figures 13 à 16 un troisième mode de réalisation de la tête de l'installation de la figure 1. Elle diffère de celle du premier mode par les caractéristiques suivantes.

Cette fois, l'axe de rotation 346 de chaque obturateur 326 est horizontal et localement parallèle à la direction tangente au rebord du couvercle. Les axes de rotation 346 des obturateurs ne sont donc pas parallèles entre eux mais s'étendent tous dans un même plan perpendiculaire à l'axe 19.

Dans ces conditions, alors que dans les deux précédents modes de réalisation les bouchons demeuraient en contact avec la face interne du bol quelle que soit leur position, cette fois les bouchons sont en contact avec cette face uniquement en position d'obturation. Les bouchons sont éloignés de la face en position d'ouverture. En l'espèce, chaque bouchon en position d'ouverture s'étend en regard du couvercle et même en contact avec ce dernier. La paroi interne du couvercle est cette fois absente.

Le maintien des bouchons en position d'ouverture est assuré par des aimants 348 qui sont ici en même nombre que les obturateurs. Les aimants 348 sont en l'espèce rigidement fixés à une face inférieure du couvercle. Chaque obturateur comprend au moins une partie en un matériau magnétique apte à coopérer magnétiquement avec l'aimant.

Chaque obturateur est agencé de sorte qu'il tend par gravité à occuper une seule position parmi la position d'obturation et la position d'ouverture de l'orifice. Il s'agit ici de la position d'obturation, qui est donc une position stable. Si besoin, on peut ajouter à chaque obturateur un contrepoids pour obtenir cet effet, s'il n'est pas déjà obtenu par la répartition de masse de l'obturateur compte tenu de la position de son axe de rotation.

Chaque aimant est choisi de sorte qu'il ne suffit pas à lui seul à déplacer l'obturateur de la position d'obturation, basse, à la position d'ouverture, haute. En revanche, il est choisi de sorte qu'il est apte à maintenir l'obturateur dans cette dernière position lorsque l'opérateur l'y place en actionnant le bouton 330 ou le place dans une position voisine. Le bouton a cette fois une forme aplatie suivant une direction radiale à l'axe 19 lorsque l'obturateur occupe la position d'obturation.

On peut réaliser chaque obturateur intégralement dans un matériau métallique apte à coopérer avec l'aimant. On peut sinon réaliser une partie de l'obturateur dans un matériau métallique non magnétique ou encore dans une matière plastique, et une autre partie de l'obturateur, comprenant le bouchon, dans un matériau métallique apte à coopérer avec l'aimant.

Le fonctionnement de l'installation est identique à celui des précédents modes de réalisation, chaque obturateur permettant à volonté d'ouvrir ou de fermer l'orifice de sortie 18 associé.

Lorsqu'on souhaite ôter le couvercle du bol, on place tous les obturateurs en position d'ouverture de sorte qu'ils sont retenus magnétiquement contre le couvercle et se trouvent ainsi rigidement fixés à ce dernier.

Dans chacun de ces modes de réalisation, le bol et le couvercle peuvent être réalisés en matière plastique ou en métal, par exemple en acier inoxydable, éventuellement non-magnétique.

### Quatrième mode de réalisation

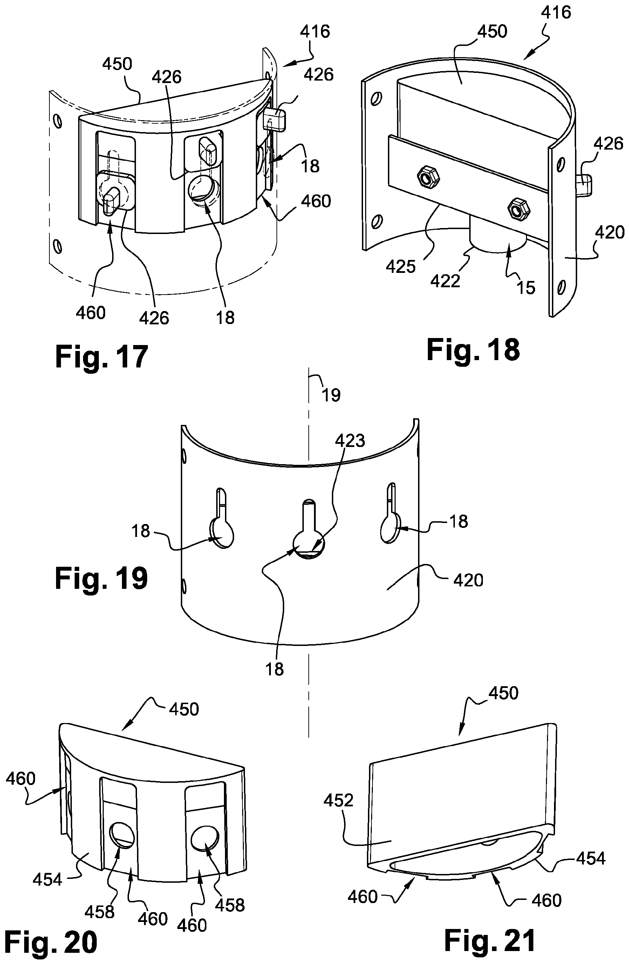

Un quatrième mode de réalisation de la tête 416 est illustré aux figures 17 à 23. Il est identique au premier mode de réalisation sauf pour ce qui suit.

Le corps comprend cette fois une paroi externe cylindrique 420, les génératrices du cylindre s'appuyant sur un demi-cercle. L'axe 19 du cylindre est vertical et forme l'axe principal de la tête.

Le corps présente à son extrémité inférieure un embout 422 par lequel il est enfilé coaxialement sur l'extrémité supérieure du mât 14. Ce rebord délimite l'orifice d'entrée 15. Le corps comprend une paroi de fond plane 423 perpendiculaire à l'axe 19 et contiguë au bord supérieur de l'embout 422 au droit duquel elle présente un orifice. Il comprend également une paroi arrière plane rectangulaire 425 parallèle à l'axe 19, contiguë au bord arrière du fond 423 et en contact par ses extrémités longitudinales avec la face interne de la paroi 420.

Comme illustré notamment à la figure 19, le corps présente des orifices externes 18 de sortie de brouillard traversant la paroi 420. Ces orifices sont ici au nombre de trois. Chaque orifice a cette fois une forme circulaire prolongée par un tronçon oblong s'étirant verticalement vers le haut. Chaque orifice 18 met en communication l'orifice d'entrée 15 avec l'extérieur de la tête via la cavité commune 17, et ce indépendamment des autres orifices 18.

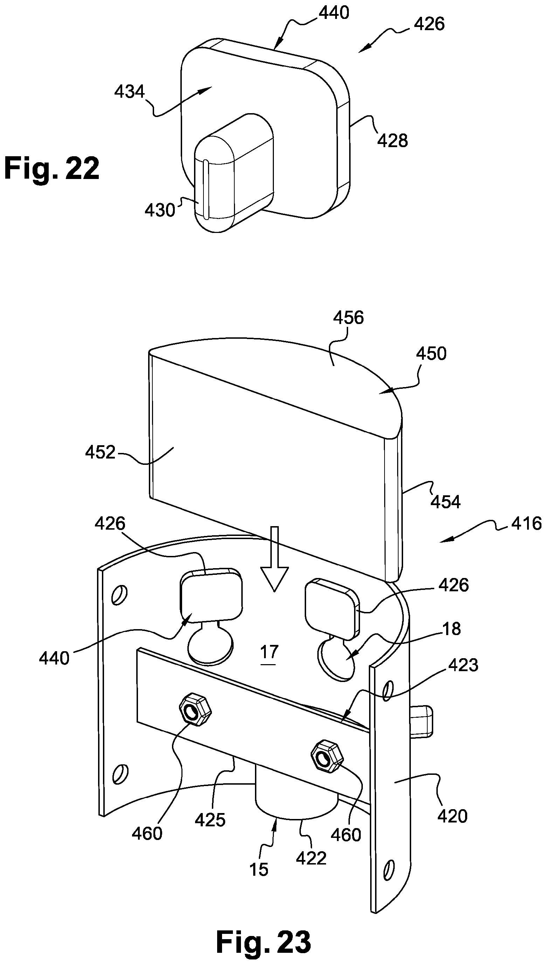

En référence notamment à la figure 22, les obturateurs 426 sont montés coulissants par rapport au corps suivant la direction verticale c'est-à-dire parallèlement à l'axe 19. Chaque obturateur 426 comprend un bouchon 428 s'étendant à l'intérieur de la tête et un bouton de manoeuvre 430 s'étendant à l'extérieur de la tête. Le bouchon 428 a en l'espèce une forme de parallélépipède rectangle aplati aux coins arrondis. Les boutons 430 ont une forme aplatie dans un plan vertical radial à l'axe 19.

La tête 416 comprend en outre une pièce interne 450 formée en l'espèce par un distributeur. Il est destiné à s'étendre dans la tête en étant en contact avec les faces internes des parois 420, 423 et 425. Le distributeur comprend pour cela une paroi arrière plane rectangulaire verticale 452 destinée à être en contact surfacique avec la paroi 425 et une paroi cylindrique 454 destinée à être en contact surfacique avec la face interne de la paroi 420. Il comprend aussi une paroi supérieure plane 456 dont les bords sont contigus à ceux des parois 452 et 454, ces trois parois formant une enceinte ouverte vers le bas au droit de la paroi 456. Cette ouverture inférieure est appliquée contre le fond 423 et met ainsi cette enceinte en communication avec le mât 14.

La paroi cylindrique 454 présente trois orifices circulaires identiques 458. Lorsque le distributeur 450 occupe sa position de fonctionnement dans la tête, les orifices 458 coïncident avec les orifices 18 respectifs.

De plus, la paroi 454 présente sur sa face externe trois glissières rectangulaires identiques 460 formant des zones amincies de cette paroi. Les glissières débouchent au bord inférieur du distributeur. Les orifices 458 s'étendent au centre des glissières correspondantes. La largeur des glissières correspond à celle des bouchons 428. La hauteur des glissières est très supérieure à celle des bouchons. De la sorte, les bouchons respectifs peuvent être reçus dans les glissières en étant guidés dans celles-ci à coulissement vertical par rapport au distributeur. Chaque glissière est suffisamment profonde en direction radiale pour que la face externe 434 de chaque bouchon ne dépasse pas de la surface enveloppe de la face externe de la paroi cylindrique 454. Ce montage est donc compatible avec le contact surfacique des parois 454 et 420 hors des glissières. Les obturateurs 426 se trouvent ainsi interposés suivant la direction radiale à l'axe 19 entre le distributeur 450 à l'intérieur et la paroi 420 à l'extérieur. Chaque bouton 430 émerge à travers la prolongation oblongue de chaque orifice afin de permettre de commander la position du bouchon depuis l'extérieur de la tête. Grâce à cet agencement, les obturateurs 426 sont retenus prisonniers dans la tête.

Chaque obturateur 426 peut donc occuper une position haute, illustrée notamment aux figures 17 et 23, dans laquelle il laisse entièrement libre l'orifice 18 correspondant. Il peut également occuper une position basse, illustrée notamment à gauche sur la figure 17, dans laquelle il obture complètement l'orifice correspondant. Ces deux positions forment les deux extrémités de la course de coulissement de l'obturateur. L'obturateur peut également être placé dans une position quelconque entre ces deux extrémités en y étant immobilisé par friction au contact des deux pièces entre lesquelles il est interposé.

Pour faciliter le glissement de chaque obturateur contre le distributeur, on peut prévoir que la face externe de ce dernier est recouverte d'un matériau tel que du polytétrafluoroéthylène.

L'assemblage de la tête 416 peut être effectué de la façon suivante en référence à la figure 23. On commence par introduire les obturateurs 426 dans la tête pour les mettre dans les orifices respectifs 18 et en butée contre la face interne de la paroi 420. On insère ensuite le distributeur 450 dans la tête par le sommet de cette dernière jusqu'à le placer contre le fond 423. Dans cette position, il met en communication le mât 14 et l'embout 422 avec les orifices 458, puis les orifices 18 lorsque ceux-ci sont laissés libres par les obturateurs. Dans le présent exemple, deux vis 460 traversent la paroi 425 et viennent en appui contre le distributeur pour l'immobiliser.

Le fonctionnement de la tête est analogue à celui des précédents modes.

Bien entendu, on pourra apporter à l'invention de nombreuses modifications sans sortir du cadre de celle-ci.

On peut prévoir que les aimants sont destinés à maintenir les obturateurs en position fermée. On peut placer les aimants sur les obturateurs et non sur le bâti de la tête.

L'installation ne forme pas nécessairement un meuble. Elle peut être utilisée dans un lieu de stockage ou de production, par exemple un lieu de vinification de vin ou d'affinage de fromages. Elle peut constituer une installation de fabrication et/ou de conditionnement. L'installation peut aussi servir à la désinfection ou à l'humidification de produits ou de volumes, par exemple de produits circulant sur un tapis, notamment sur une chaîne de fabrication ou de conditionnement.

## Revendications

1. Installation (2) de présentation de produits alimentaires et/ou de fleurs comprenant des moyens (8) aptes à générer un brouillard de gouttelettes et une tête (16 ; 116 ; 216 ; 316 ; 416) de diffusion de brouillard, la tête présentant :
- un orifice (15) d'entrée de brouillard, et
- au moins deux orifices (18) de sortie de brouillard aptes chacun à mettre l'orifice d'entrée en communication avec l'extérieur de la tête,
**caractérisée en ce que** la tête comprend au moins deux obturateurs (126 ; 226 ; 326 ; 426) aptes à obturer les orifices de sortie respectifs, chaque obturateur étant apte à obturer un seul des orifices de sortie, les obturateurs étant montés mobiles par rapport à un bâti de la tête indépendamment l'un de l'autre.

2. Installation pour une chaine de fabrication et/ou de conditionnement, **caractérisée en ce que** l'installation comprend des moyens (8) aptes à générer un brouillard de gouttelettes et une tête (16 ; 116 ; 216 ; 316 ; 416) de diffusion de brouillard, la tête présentant :
- un orifice (15) d'entrée de brouillard, et
- au moins deux orifices (18) de sortie de brouillard aptes chacun à mettre l'orifice d'entrée en communication avec l'extérieur de la tête,
la tête comprenant au moins deux obturateurs (126 ; 226 ; 326 ; 426) aptes à obturer les orifices de sortie respectifs, chaque obturateur étant apte à obturer un seul des orifices de sortie, les obturateurs étant montés mobiles par rapport à un bâti de la tête indépendamment l'un de l'autre.

3. Installation pour un lieu de stockage ou de production, **caractérisée en ce que** l'installation comprend des moyens (8) aptes à générer un brouillard de gouttelettes et une tête (16 ; 116 ; 216 ; 316 ; 416) de diffusion de brouillard, la tête présentant :
- un orifice (15) d'entrée de brouillard, et
- au moins deux orifices (18) de sortie de brouillard aptes chacun à mettre l'orifice d'entrée en communication avec l'extérieur de la tête,
la tête comprenant au moins deux obturateurs (126 ; 226 ; 326 ; 426) aptes à obturer les orifices de sortie respectifs, chaque obturateur étant apte à obturer un seul des orifices de sortie, les obturateurs étant montés mobiles par rapport à un bâti de la tête indépendamment l'un de l'autre.

4. Installation de désinfection de produits ou de volumes, **caractérisée en ce que** l'installation comprend des moyens (8) aptes à générer un brouillard de gouttelettes et une tête (16 ; 116 ; 216 ; 316 ; 416) de diffusion de brouillard, la tête présentant :
- un orifice (15) d'entrée de brouillard, et
- au moins deux orifices (18) de sortie de brouillard aptes chacun à mettre l'orifice d'entrée en communication avec l'extérieur de la tête,
la tête comprenant au moins deux obturateurs (126 ; 226 ; 326 ; 426) aptes à obturer les orifices de sortie respectifs, chaque obturateur étant apte à obturer un seul des orifices de sortie, les obturateurs étant montés mobiles par rapport à un bâti de la tête indépendamment l'un de l'autre.

5. Installation (2) selon l'une quelconque des revendications précédentes dans laquelle les obturateurs (126 ; 226 ; 326) sont montés rotatifs par rapport au bâti, notamment suivant
un axe de rotation vertical (19) ou
horizontal (346).

6. Installation (2) selon l'une quelconque des revendications 1 à 4 dans laquelle les obturateurs (426) sont montés coulissants par rapport au bâti, notamment suivant une direction parallèle à un axe principal (19) de la tête (416).

7. Installation (2) selon au moins l'une quelconque des revendications précédentes, agencée de sorte que chaque obturateur (326) tend par gravité à occuper une position unique prédéterminée parmi une position d'obturation de l'orifice (18) et une position d'ouverture de l'orifice, de préférence la position d'obturation.

8. Installation (2) selon au moins l'une quelconque des revendications précédentes, qui comprend des aimants (348) aptes à retenir les obturateurs respectifs (326) dans une position prédéterminée, de préférence une position d'ouverture de l'orifice (18) par l'obturateur.

9. Installation (2) selon au moins l'une quelconque des revendications précédentes dans laquelle chaque obturateur (126 ; 226 ; 326) traverse un orifice (18) d'un couvercle de la tête.

10. Installation (2) selon au moins l'une quelconque des revendications précédentes, qui comprend deux parois (420, 454) définissant les orifices (18), s'étendant l'une contre l'autre, entre lesquelles les obturateurs (426) sont interposés et conformées pour guider les obturateurs.

11. Installation (2) selon au moins l'une quelconque des revendications précédentes qui comprend un distributeur interne (450) distinct du bâti et apte à mettre l'orifice d'entrée (15) en communication avec les orifices de sortie (18).

12. Procédé de diffusion d'un brouillard de gouttelettes sur des produits, **caractérisé en ce qu'**on utilise au moins une installation (2) selon l'une quelconque des revendications précédentes.

## Patentansprüche

1. Anordnung (2) zur Darbietung von Lebensmitteln und/oder von Blumen, die Anordnung umfassend eine Einrichtung (8), welche geeignet ist, einen Nebel aus Tröpfchen zu erzeugen, und ferner umfassend einen Nebel-Diffusionskopf (16; 116; 216; 316; 416), der Nebel-Diffusionskopf aufweisend:
- eine Nebeleinlassöffnung (15), und
- mindestens zwei Nebelauslassöffnungen (18), die jeweils zum Verbinden der Nebeleinlassöffnung mit der Außenseite des Nebel-Diffusionskopfes geeignet sind, **dadurch gekennzeichnet, dass**
der Kopf mindestens zwei Verschlüsse (126; 226; 326; 426) umfasst, welche geeignet sind, die jeweiligen Auslassöffnungen zu schließen, wobei jeder einzelne der Verschlüsse geeignet ist, eine einzige der Auslassöffnungen allein zu schließen, wobei die Verschlüsse beweglich gelagert sind, so dass sie sich relativ zu einem Tragrahmen des Kopfes unabhängig voneinander bewegen lassen.

2. Anordnung für eine Produktkette und/oder für eine Verpackungskette,
**dadurch gekennzeichnet, dass** die Anordnung eine Einrichtung (8) umfasst, welche geeignet ist, einen Nebel aus Tröpfchen zu erzeugen, und ferner einen Nebel-Diffusionskopf (16; 116; 216; 316; 416) umfasst, der Nebel-Diffusionskopf aufweisend:
- eine Nebeleinlassöffnung (15), und
- mindestens zwei Nebelauslassöffnungen (18), die jeweils zum Verbinden der Nebeleinlassöffnung mit der Außenseite des Nebel-Diffusionskopfes geeignet sind,
wobei der Kopf mindestens zwei Verschlüsse (126; 226; 326; 426) umfasst, welche geeignet sind, die jeweiligen Auslassöffnungen zu schließen, wobei jeder einzelne der Verschlüsse geeignet ist, eine einzige der Auslassöffnungen allein zu schließen, wobei die Verschlüsse beweglich gelagert sind, so dass sie sich relativ zu einem Tragrahmen des Kopfes unabhängig voneinander bewegen lassen.

3. Anordnung für eine Lagerstelle oder für eine Produktionsstelle, **dadurch gekennzeichnet, dass** die Anordnung eine Einrichtung (8) umfasst, welche geeignet ist, einen Nebel aus Tröpfchen zu erzeugen, und ferner einen Nebel-Diffusionskopf (16; 116; 216; 316; 416) umfasst, der Nebel-Diffusionskopf aufweisend:
- eine Nebeleinlassöffnung (15), und
- mindestens zwei Nebelauslassöffnungen (18), die jeweils zum Verbinden der Nebeleinlassöffnung mit der Außenseite des Nebel-Diffusionskopfes geeignet sind,
wobei der Kopf mindestens zwei Verschlüsse (126; 226; 326; 426) umfasst, welche geeignet sind, die jeweiligen Auslassöffnungen zu schließen, wobei jeder einzelne der Verschlüsse geeignet ist, eine einzige der Auslassöffnungen allein zu schließen, wobei die Verschlüsse beweglich gelagert sind, so dass sie sich relativ zu einem Tragrahmen des Kopfes unabhängig voneinander bewegen lassen.

4. Anordnung für die Desinfektion von Produkten oder von Volumina, **dadurch gekennzeichnet, dass** die Anordnung eine Einrichtung (8) umfasst, welche geeignet ist, einen Nebel aus Tröpfchen zu erzeugen, und ferner einen Nebel-Diffusionskopf (16; 116; 216; 316; 416) umfasst, der Nebel-Diffusionskopf aufweisend:
- eine Nebeleinlassöffnung (15), und
- mindestens zwei Nebelauslassöffnungen (18), die jeweils zum Verbinden der Nebeleinlassöffnung mit der Außenseite des Nebel-Diffusionskopfes geeignet sind,
wobei der Kopf mindestens zwei Verschlüsse (126; 226; 326; 426) umfasst, welche geeignet sind, die jeweiligen Auslassöffnungen zu schließen, wobei jeder einzelne der Verschlüsse geeignet ist, eine einzige der Auslassöffnungen allein zu schließen, wobei die Verschlüsse beweglich gelagert sind, so dass sie sich relativ zu einem Tragrahmen des Kopfes unabhängig voneinander bewegen lassen.

5. Anordnung (2) nach einem der vorhergehenden Ansprüche,
wobei die Verschlüsse (126; 226; 326) an dem Tragrahmen drehbar relativ zueinander montiert sind, insbesondere Folgendes: eine vertikale Drehachse (346) oder eine horizontale Drehachse (19).

6. Anordnung (2) nach einem der Ansprüche 1 bis 4, wobei die Verschlüsse (426) gleitend relativ zu dem Rahmen angebracht sind, insbesondere parallel zu einer Hauptachse (19) des Kopfes (416).

7. Anordnung (2) nach zumindest einem der vorhergehenden Ansprüche, wobei die Anordnung derart ausgebildet ist, dass jeder Verschluss (326) durch Schwerkraft dazu neigt, eine vorbestimmte bestimmte Position in Form einer Ventilsperrstellung und in Form einer Ventilöffnungsposition einzunehmen, vorzugsweise die Position der Ventilsperrstellung der Nebelauslassöffnung (18).

8. Anordnung (2) nach zumindest einem der vorhergehenden Ansprüche, umfassend Magnete (348), welche derart angepasst sind, die Verschlüsse (326) jeweils in einer vorgegebenen Position zu halten, vorzugsweise eine Position in Form einer Ventilöffnungsposition der Nebelauslassöffnung (18).

9. Anordnung (2) nach zumindest einem der vorhergehenden Ansprüche, wobei jeder Verschluss (126; 226; 326) eine Nebelauslassöffnung (18) einer Abdeckung des Kopfes durchläuft.

10. Anordnung (2) nach zumindest einem der vorhergehenden Ansprüche, welche zwei Wände umfasst (420, 454), welche die Nebelauslassöffnungen (18) definieren, welche sich gegenüberliegend erstrecken, zwischen welchen die Verschlüsse (426) dazwischen gesetzt sind und angepasst sind, um die Verschlüsse zu führen.

11. Anordnung (2) nach zumindest einem der vorhergehenden Ansprüche, wobei die Anordnung einen internen Verteiler (450) aufweist, der getrennt von dem Tragrahmen ist und der dazu ausgebildet ist, mit der Nebeleinlassöffnung (15) und mit den Nebelauslassöffnungen (18) zu koppeln.

12. Verfahren zum Diffundieren eines Tropfennebels auf Produkte, **dadurch gekennzeichnet, dass** das Verfahren eine Anordnung (2) nach zumindest einem der vorhergehenden Ansprüche verwendet.

## Claims

1. Installation (2) for food product and/or flower presentation comprising means (8) suitable for generating a mist of droplets and a mist diffusion head (16 ; 116 ; 216 ; 316 ; 416) which exhibits:
- a mist inlet orifice (15), and
- at least two mist outlet orifices (18) each suitable for connecting the inlet orifice with the outside of the head,
**characterized in that** the head comprises at least two shutters (126 ; 226 ; 326 ; 426) suitable for blocking the respective outlet orifices, each shutter being able to block just one of the outlet orifices, the shutters being mounted to move relative to a frame of the head independently of one another.

2. Installation for a production and/or packaging line **characterized in that** the installation comprises means (8) suitable for generating a mist of droplets and a mist diffusion head (16 ; 116 ; 216 ; 316 ; 416) which exhibits:
- a mist inlet orifice (15), and
- at least two mist outlet orifices (18) each suitable for connecting the inlet orifice with the outside of the head,
the head comprising at least two shutters (126 ; 226 ; 326 ; 426) suitable for blocking the respective outlet orifices, each shutter being able to block just one of the outlet orifices, the shutters being mounted to move relative to a frame of the head independently of one another.

3. Installation for a place of storing or of production, **characterized in that** the installation comprises means (8) suitable for generating a mist of droplets and a mist diffusion head (16 ; 116 ; 216 ; 316 ; 416) which exhibits:
- a mist inlet orifice (15), and
- at least two mist outlet orifices (18) each suitable for connecting the inlet orifice with the outside of the head,
the head comprising at least two shutters (126 ; 226 ; 326 ; 426) suitable for blocking the respective outlet orifices, each shutter being able to block just one of the outlet orifices, the shutters being mounted to move relative to a frame of the head independently of one another.

4. Installation for disinfecting products or volumes, **characterized in that** the installation comprises means (8) suitable for generating a mist of droplets and a mist diffusion head (16 ; 116 ; 216 ; 316 ; 416) which exhibits:
- a mist inlet orifice (15), and
- at least two mist outlet orifices (18) each suitable for connecting the inlet orifice with the outside of the head,
the head comprising at least two shutters (126 ; 226 ; 326 ; 426) suitable for blocking the respective outlet orifices, each shutter being able to block just one of the outlet orifices, the shutters being mounted to move relative to a frame of the head independently of one another.

5. Installation (2) according to any of the preceding claims in which the shutters (126 ; 226 ; 326) are mounted to rotate relative to the frame, notably on a vertical (19) or
horizontal axis of rotation (346).

6. Installation according to any of claims 1 to 4 in which the shutters (426) are mounted to slide relative to the frame, notably in a direction parallel to a main axis (19) of the head (416).

7. Installation (2) according to any of the preceding claims, arranged such that each shutter (326) tends by gravity to occupy a predetermined single position out of an orifice (18) blocking position and an orifice opening position, preferably the blocking position.

8. Installation (2) according to any of the preceding claims, which comprises magnets (348) suitable for retaining the respective shutters (326) in a predetermined position, preferably a position of opening of the orifice by the shutter.

9. Installation (2) according to any of the preceding claims in which each shutter (126 ; 226 ; 326) passes through an orifice (18) of a cover of the head.

10. Installation (2) according to any of the preceding claims which comprises two walls (420, 454) defining the orifices (18), extending one against the other, between which the shutters (426) are interposed and configured to guide the shutters.

11. Installation (2) according to any of the preceding claims which comprises an internal dispenser (450) distinct from the frame and suitable for connecting the inlet orifice (15) with the outlet orifices (18).

12. Method for diffusing a mist of droplets onto products, **characterized in that** at least one installation (2) according to any of the preceding claims is used.
